# EUROPÄISCHE PATENTSCHRIFT

(11) **EP 2 863 094 B1**
(45) Veröffentlichungstag und Bekanntmachung des Hinweises auf die Patenterteilung: **31.08.2016**
(21) Anmeldenummer: 14189146.5
(22) Anmeldetag: 16.10.2014
(51) Int. Cl.: F16K 31/60, F16K 27/12

(54) **Sanitärarmatur mit einem Griffkappen-Hubmechanismus**
Sanitary fitting with a handle cap lifting mechanism
Robinetterie dotée d'un mécanisme de levage à poignée

(30) Priorität: 17.10.2013 DE 102013017283
(43) Veröffentlichungstag der Anmeldung: 22.04.2015
(73) Patentinhaber: Ideal Standard International BVBA, 1935 Zaventem (BE)
(72) Erfinder: Müller, Alexander, 54516 Wittlich (DE)
(74) Vertreter: Feucker, Max Martin

(56) Entgegenhaltungen:
- DE-A1-102006 006 774
- DE-U1- 20 312 478
- US-A- 3 287 985
- US-A- 3 773 079
- US-A- 4 730 640

## Beschreibung

Die Erfindung betrifft eine Sanitärarmatur mit einem einen Wasserauslauf aufweisenden Armaturenkörper und mit einer darin angeordneten, an Zuleitungen für Kaltwasser und Warmwasser angeschlossenen Kartusche, wobei ein abgedichteter Ausströmweg aus der Kartusche in den Wasserauslauf eingerichtet und an dem Armaturenkörper eine Griffkappe mit einem der Einstellung von Wassermenge und Wassertemperatur dienenden und hierzu an einen sowohl in Umfangrichtung der Kartusche drehbaren als auch in Längsachse der Kartusche schwenkbaren Betätigungshebel der Kartusche gekoppelten Handhebel angeordnet ist, wobei die Griffkappe auf den Armaturenkörper aufgestülpt ist.

Eine Sanitärarmatur mit den vorgenannten Merkmalen ist in der DE 10 2006 006 774 A1 beschrieben. Hierbei ist der zur Einstellung von Wassermenge und Wassertemperatur sowohl in Umfangsrichtung des Armaturenkörpers drehbar als auch in der Längsachse des Armaturenkörpers schwenkbar angeordnete Handhebel einstückiger Bestandteil einer Griffkappe, die auf einer am oberen Ende des Armaturenkörpers eingerichteten kugelförmigen Lagerung sitzt. Soweit in das Innere des Armaturenkörpers eine an Zuleitungen für Kaltwasser und Warmwasser angeschlossene Kartusche eingesetzt ist, weist die Kartusche einen dreh- und schwenkbaren Betätigungshebel auf, an dem der Handhebel bzw. die einstückig damit ausgebildete Griffkappe angeschlossen ist.

Weiterhin ist beispielsweise aus der DE 203 12 478 U1 eine Bauart von Sanitärarmaturen bekannt, bei welcher der Handhebel zur Steuerung des Kartuschen-Betätigungshebels unabhängig von dem Vorhandensein einer Griffkappe an dem Armaturenkörper angeordnet ist. Bei der in der DE 203 12 478 U1 beschriebenen Sanitärarmatur ist der gebogene Auslauf in der Verlängerung der Längsachse des die Kartusche aufnehmenden Armaturenkörpers angeordnet, so dass eine Griffkappe entfällt. Soweit der erforderliche Handhebel in einer radialen Ausrichtung zum Armaturenkörper angeordnet und an die im Inneren des Armaturenkörpers liegende Kartusche angeschlossen ist, ist auf dem äußeren Umfang des Armaturenkörpers eine den Handhebel in einer zugeordneten Öffnung aufnehmende und dadurch den Handhebel führende Manschette angeordnet, die gegenüber dem Armaturenkörper sowohl drehbar als auch längsverschiebbar ist. Insoweit wird die äußere Manschette durch die Bewegung des Handhebels in dessen Bewegungsrichtungen jeweils mitgenommen und verdreht bzw. verschoben.

Eine weitere Sanitärarmatur ist aus US 4,478,249 bekannt, bei welcher eine Griffkappe und ein Handhebel getrennt voneinander an dem Armaturenkörper angeordnet sind. Dies ist dadurch bedingt, dass der Betätigungshebel der Kartusche zur Einstellung der Wassermenge in axialer Längsachse der Kartusche bewegt werden muss. Die an einem zentralen, von dem Armaturenkörper abstehenden Stift geführte Griffkappe wird in die Öffnungsstellung axial verschoben, wodurch ein Freiraum zwischen Griffkappe und Armaturenkörper entsteht, durch den Fremdstoffe in die Sanitärarmatur gelangen können. Zudem ist die Ästhetik des Griffes in der Öffnungsstellung nicht ansprechend. Eine Sanitärarmatur mit einem in Längsachse verschiebbaren Betätigungshebel der Kartusche ist zudem aus US 3,287,985 A bekannt.

Der Erfindung liegt insoweit die Aufgabe zugrunde, eine Sanitärarmatur mit den eingangs genannten Merkmalen derart einzurichten, dass ein Eindringen von Fremdstoffen in die Sanitärarmatur verhindert werden kann und dass zusätzlich die Sanitärarmatur in der Öffnungsstellung ein optisch ansprechendes Bild hat.

Die Lösung dieser Aufgabe ergibt sich einschließlich vorteilhafter Ausgestaltungen und Weiterbildungen der Erfindung aus dem Inhalt der Ansprüche, die dieser Beschreibung nachgestellt sind.

Die Erfindung sieht im Einzelnen vor, dass die Griffkappe getrennt von dem Handhebel ausgebildet ist und zwischen einer in der Längsachse des Armaturenkörpers unteren Schließstellung und einer oberen Öffnungsstellung der Sanitärarmatur an einer im Inneren des Armaturenkörpers drehfest festgelegten Führungshülse linear verschieblich ist und dass der Handhebel mit seinem einen Ende an den Betätigungshebel der Kartusche angeschlossene ist und durch ein in einer auf dem Umfang der Griffkappe angeordneten Öffnung eingesetztes Aufnahmeteil hindurchgeführt ist, wobei in dem Armaturenkörper eine in der Schließstellung von der Griffkappe übergriffene und in der oberen Öffnungsstellung durch Verschiebung der Griffkappe sichtbare Blende angeordnet ist. Soweit die Griffkappe aufgrund ihrer Verbindung mit dem Handhebel den Bewegungen des Handhebels folgt und dabei insbesondere im Rahmen ihrer Längsverschiebung von ihrem durch die untere Schließstellung definierten Sitz abgehoben wird, ist durch die Anordnung der den von der verschobenen Griffkappe freigegebenen Zwischenraum abdeckenden Blende dafür Sorge getragen, dass ein optisch ansprechendes Bild der Sanitärarmatur auch in der oberen Öffnungsstellung des Handhebels aufrechterhalten ist. Gleichzeitig sorgt die Blende auch dafür, dass in dieser Stellung von außen keine Fremdstoffe in das Innere der Sanitärarmatur gelangen können.

Nach einem Ausführungsbeispiel der Erfindung ist vorgesehen, dass das in der Öffnung der Griffkappe eingesetzte Aufnahmeteil auf seiner Außenseite eine die Bewegung des Handhebels in allen seinen Bewegungsrichtungen zulassende trichterförmige Erweiterung aufweist.

Im Rahmen der Vereinfachung der Konstruktion ist nach einem Ausführungsbeispiel der Erfindung vorgesehen, dass die Blende an der Führungshülse festgelegt ist.

Zur Verbesserung der Verschiebebewegung der Griffkappe auf der Führungshülse ist vorgesehen, dass an dem der Griffkappe zugewandten oberen Ende der Blende ein von der Griffkappe übergriffener Gleitring festgelegt ist.

Weiterhin ist nach einem Ausführungsbeispiel der Erfindung vorgesehen, dass die Führungshülse auf ihrem äußeren Umfang radial vorspringende Führungsrippen zur Führung der Griffkappe daran aufweist.

Um die Bewegung des die Führungshülse durchgreifenden Handhebels in dessen Bewegungsrichtungen zu ermöglichen, ist nach einem Ausführungsbeispiel der Erfindung vorgesehen, dass die im Armaturenträger drehfest festgelegte Führungshülse auf ihrem Umfang einen fensterartigen Ausschnitt aufweist.

In der Zeichnung ist ein Ausführungsbeispiel der Erfindung wiedergegeben, welches nachstehend beschrieben ist. Es zeigen:
- Fig. 1: eine Sanitärarmatur mit aufgestülpter Griffkappe und einem davon getrennt angeordneten Handhebel in einer Perspektivansicht,
- Fig. 2: die an bzw. im Armaturenkörper angeordneten Bauteile, soweit für das Verständnis der Erfindung erforderlich, in einer auseinandergezogenen Einzeldarstellung,
- Fig. 3: den Zusammenbau der Sanitärarmatur im Bereich von Griffkappe und Handhebel in einer Ansicht bei Schließstellung des Handhebels und teilweise weggeschnittenem Armaturenkörper,
- Fig. 4: den Gegenstand der Fig. 3 in der Öffnungsstellung des Handhebels.

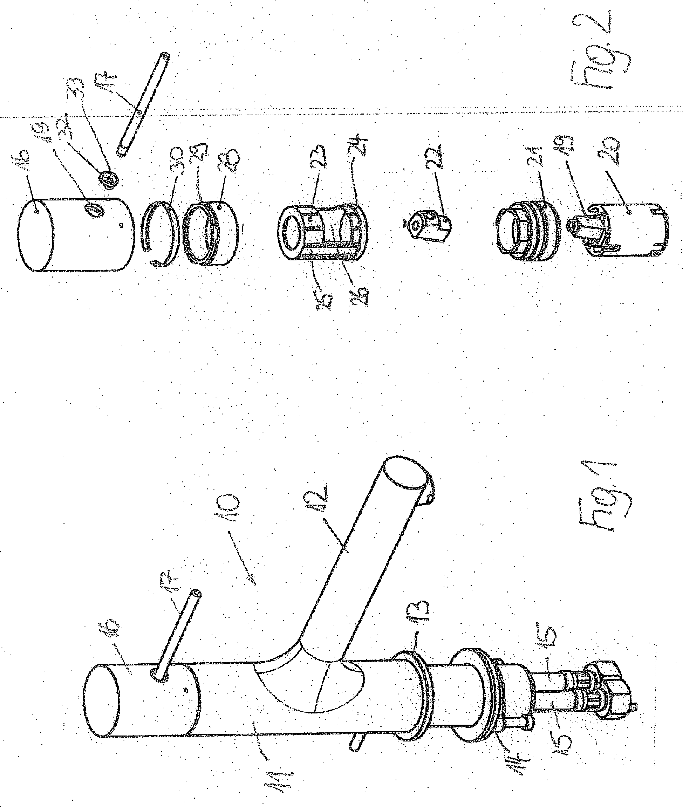

Die aus Fig. 1 ersichtliche Sanitärarmatur 10 weist einen hochkant stehenden zylindrischen Armaturenkörper 11 mit einem daran angebrachten Wasserauslauf 12 auf, wobei der Armaturenkörper 11 in seinem unteren Bereich mit einem Sockelring 13 versehen ist, der bei einer auf einem Waschtisch oder sonstigen sanitären Apparat montierten Sanitärarmatur auf der Oberfläche des sanitären Apparats aufsteht. An einer den Sanitärapparat in einer zugeordneten Ausnehmung durchgreifenden Verlängerung des Armaturenkörpers 11 ist eine Befestigungsanordnung 14 zur Festlegung des Armaturenkörpers 11 an dem nicht dargestellten sanitären Apparat vorgesehen. Von der Unterseite des Armaturenkörpers 11 her sind Zuleitungen 15 für Kaltwasser und Warmwasser in den Armaturenkörper 11 hineingeführt. Oberhalb seines Wasserauslaufes 12 ist der zylindrische Armaturenkörper 11 durch eine aufgestülpte, ebenfalls zylindrische Griffkappe 16 abgeschlossen, die eine Öffnung 18 zum Hindurchführen eines an der Griffkappe 16 angeordneten Handhebels 17 aufweist.

Wie sich im Einzelnen aus Fig. 2 ergibt, ist im Inneren des Armaturenkörpers 11 eine an die Zuleitungen 15 angeschlossene Kartusche 20 mit einem an deren oberen Ende ausgebildeten Betätigungshebel 19 angeordnet, wobei der Betätigungshebel 19 sowohl in Umfangrichtung der Kartusche 20 drehbar als auch in deren Längsachse schwenkbar ist, so dass durch die Bewegung des Betätigungshebels 19 Wassertemperatur und Wassermenge des aus der Kartusche 20 in den Wasserauslauf 12 eintretenden Wassers wählbar sind. Zur Halterung der Kartusche 20 ist ein den Betätigungshebel 19 übergreifender und im Armatürenköper 11 festgelegter Haltekörper 21 vorgesehen. Weiterhin ist im Inneren des Armaturenkörpers eine Führungshülse 23 angeordnet, die an ihrem unteren Ende einen umlaufenden, über deren Umfang vorstehenden Flansch 24 sowie auf ihrem äußeren Umfang radial vorspringende Führungsrippen 25 aufweist. Ferner ist in der Führungshülse 23 ein fensterartiger Ausschnitt 26 angeordnet.

Bestandteil des Zusammenbaus der Sanitärarmatur 10 ist weiterhin eine Blende 28, die an ihrem oberen Ende einen umlaufenden Einstich 29 zur Halterung eines an der Blende 28 festzulegenden Gleitringes 30 aufweist, wobei der Gleitring mit einem umlaufenden, einwärts vorspringenden Vorsprung 31 in den Einstich 29 der Blende 28 eingreift.

Soweit der Handhebel 17 durch die Öffnung 18 in der Griffkappe 16 hindurchgeführt ist, ist in die Öffnung 18 ein Aufnahmeteil 32 eingesetzt und darin festgelegt, welches auf seiner Außenseite eine die Bewegung des Handhebels 17 in allen seinen Bewegungsrichtungen zulassende trichterförmige Erweiterung 33 aufweist. Gleichzeitig bildet das Aufnahmeteil 32 eine Dichtung gegen den hierdurch geführten Handhebel 17 aus. Der Handhebel 17 ist mittels eines Adapters 22 an den Betätigungshebel 19 der Kartusche 20 zu koppeln.

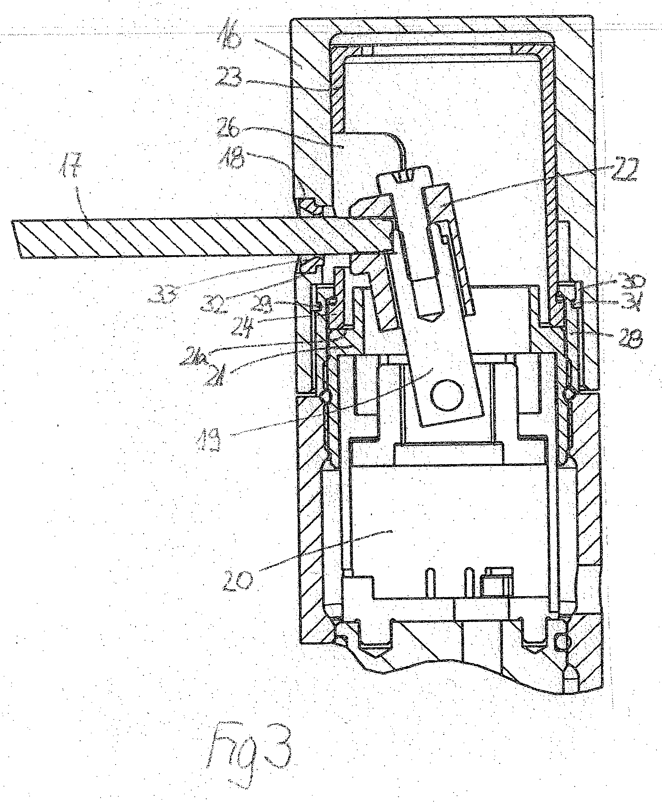

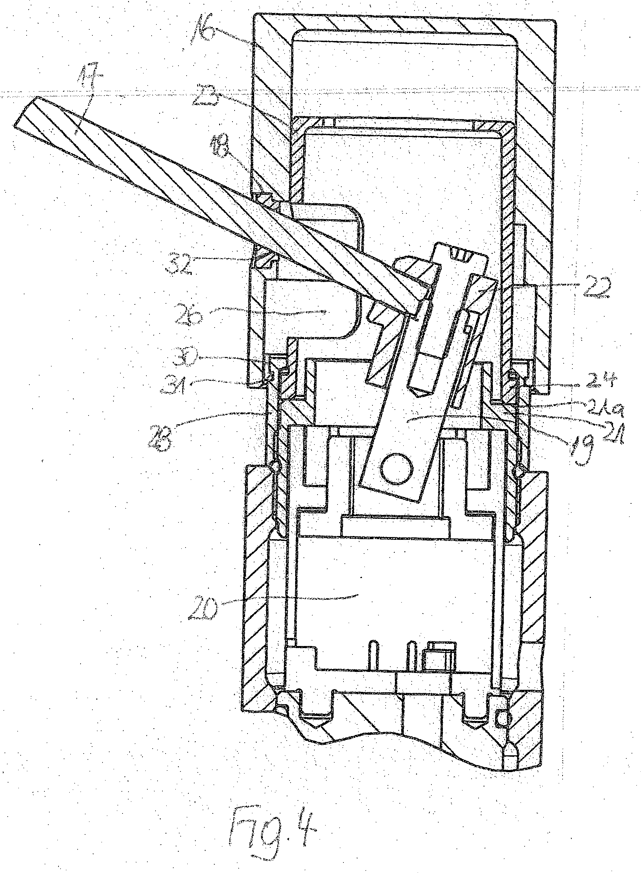

Wie sich weiterhin aus Figuren 3 und 4 entnehmen lässt, ist die im Inneren des zylindrischen Armaturenkörpers 11 angeordnete Kartusche 20 durch den die Kartusche 20 einschließlich deren Betätigungshebel 19 übergreifenden Haltekörper 21 in dem Armaturenkörper 11 festgelegt. Soweit der Haltekörper 21 in seinem oberen Bereich mit einem Rücksprung 21a versehen ist, ist in den Rücksprung 21a die Führungshülse 23 mit ihrem unteren, den nach außen abragenden Flansch 24 aufweisenden Ende eingesetzt. Auf den äußeren Umfang von Führungshülse 23 und sich daran anschließendem Haltekörper 21 ist eine Blende 28 aufgeschoben, die sich mit einem nach innen vorspringenden Vorsprung auf dem Flansch 24 der Führungshülse 23 abstützt. An dem oberen Ende der Blende 28 ist ein Gleitring 30 mit einem nach innen vorspringenden Vorsprung 31 in einen auf dem äußeren Umfang der Blende 28 ausgebildeten Einstich 29 festgelegt. Die aus Führungshülse 23, Blende 28 und daran festgelegtem Gleitring 30 bestehende Baueinheit wird von der darauf aufgeschobenen Griffkappe 16 übergriffen, wobei die Griffkappe 16 zu diesem Zweck innenseitig einen gestuften Durchmesser aufweist, der in dem oberen, lediglich die Führungshülse 23 übergreifenden Bereich geringer ausgebildet ist als in dem unteren, die Blende 28 mit Gleitring 30 übergreifenden Bereich.

Der seitlich in die Öffnung 18 der Griffkappe 16 eingesetzte Handhebel 17 durchgreift die Griffkappe 16 in dem in die Öffnung 18 eingesetzten Aufnahmeteil 32 in einer durch das Aufnahmeteil 32 abgedichteten Form, wobei die an dem Aufnahmeteil 32 ausgebildete trichterförmige Erweiterung 33 eine Bewegung des Handhebels 17 in allen Bewegungsrichtungen zulässt, so dass die Griffkappe 16 jeweils den Bewegungen des Handhebels 17 folgen kann. An seinem inneren Ende ist der Handhebel 17 mittels des auf den Betätigungshebel 19 der Kartusche 20 aufgesetzten Adapters 22 an vorgenannten Betätigungshebel 19 angeschlossen.

Soweit bei einem bestimmungsgemäßen Gebrauch der Sanitärarmatur 10 der Handhebel 17 gegenüber dem Armaturenkörper 10 zur Einstellung der Temperatur in Umfangsrichtung gedreht werden muss, ist durch Anordnung des fensterartigen Ausschnitts 26 in der Wandung der Führungshülse 23 der dafür notwendige Freiraum geschaffen. Hierbei folgt die Griffkappe 16 durch entsprechende Drehung der Bewegung des Handhebels 17.

Soweit zur Einstellung der Durchflussmenge der Handhebel 17 in der Längsachse des Armaturenkörpers 11 bzw. der Kartusche 20 zu verschwenken ist, folgt die Griffkappe 16 auch dieser Bewegung des Handhebels 17, wobei die Griffkappe auf der Führungshülse 23 linear nach oben verschoben wird. Soweit sich dabei der untere Rand der Griffkappe 16 von dem oberen Ende des Armaturenkörpers 11 abhebt, ist die dadurch entstehende Lücke zwischen Griffkappe 16 und Armaturenkörper 11 durch die in diesem Bereich angeordnete, innenliegende Blende 28 abgedeckt, wie im Einzelnen aus Fig. 4 ersichtlich.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sanitärarmatur (10) mit einem einen Wasserauslauf (12) aufweisenden Armaturenkörper und mit einer darin angeordneten, an Zuleitungen (15) für Kaltwasser und Warmwasser angeschlossenen Kartusche (20), wobei ein abgedichteter Ausströmweg aus der Kartusche (20) in den Wasserauslauf (12) eingerichtet und an dem Armaturenkörper (11) eine Griffkappe (16) mit einem der Einstellung von Wassermenge und Wassertemperatur dienenden und hierzu an einen sowohl in Umfangrichtung der Kartusche (20) drehbaren als auch in Längsachse der Kartusche (20) schwenkbaren Betätigungshebel (19) der Kartusche (20) gekoppelten Handhebel (17) angeordnet ist, wobei die Griffkappe (16) auf den Armaturenkörper (11) aufgestülpt ist, **dadurch gekennzeichnet, dass** die Griffkappe (16) getrennt von dem Handhebel (17) ausgebildet ist und zwischen einer in der Längsachse des Armaturenkörpers (11) unteren Schließstellung und einer oberen Öffnungsstellung der Sanitärarmatur (10) an einer im Inneren des Armaturenkörpers (11) festgelegten Führungshülse (23) linear verschieblich ist und dass der Handhebel (17) mit seinem einen Ende an den Betätigungshebel (19) der Kartusche (20) angeschlossen ist und durch ein in einer auf dem Umfang der Griffkappe (16) angeordneten Öffnung (18) eingesetztes Aufnahmeteil (32) hindurchgeführt ist wobei in dem Armaturenkörper (11) eine in der Schließstellung von der Griffkappe (16) übergriffene und in der oberen Öffnungsstellung durch Verschiebung der Griffkappe (16) sichtbare Blende (28) angeordnet ist.

2. Sanitärarmatur nach Anspruch 1, **dadurch gekennzeichnet, dass** die im Armaturenkörper (11) drehfest festgelegte Führungshülse (23) auf ihrem Umfang einen die Bewegung des Handhebels (17) in dessen Bewegungsrichtungen ermöglichenden fensterartigen Ausschnitt (26) aufweist.

3. Sanitärarmatur nach Anspruch 1 oder 2, **dadurch gekennzeichnet, dass** an dem der Griffkappe (16) zugewandten oberen Ende der Blende (28) ein von der Griffkappe (16) übergriffener Gleitring (30) festgelegt ist.

4. Sanitärarmatur nach einem der Ansprüche 1 bis 3, **dadurch gekennzeichnet, dass** das in der Öffnung (18) der Griffkappe (16) eingesetzte Aufnahmeteil (32) auf seiner Außenseite eine die Bewegung des Handhebels (17) in allen seinen Bewegungsrichtungen zulassende trichterförmige Erweiterung (33) aufweist.

5. Sanitärarmatur nach einem der vorhergehenden Ansprüche, **dadurch gekennzeichnet, dass** die Blende (28) an der Führungshülse (23) festgelegt ist.

6. Sanitärarmatur nach einem der vorhergehenden Ansprüche, **dadurch gekennzeichnet, dass** die Führungshülse (23) auf ihrem äußeren Umfang radial vorspringende Führungsrippen (25) zur Führung der Griffkappe (16) daran aufweist.

## Claims

1. A sanitary fitting (10) with a fitting body having a water outlet (12) and with a cartridge (20) arranged therein, connected to supply pipes (15) for cold water and hot water, wherein a sealed outflow path is arranged from the cartridge (20) into the water outlet (12) and on the fitting body (11) a handle cap (16) is arranged having a hand lever (17) serving for adjusting the amount of water and the water temperature and coupled for this to an actuating lever (19) of the cartridge (20), said actuating lever being both rotatable in circumferential direction of the cartridge (20) and also pivotable in the longitudinal axis of the cartridge (20), wherein the handle cap (16) is placed onto the fitting body (11), **characterized in that** the handle cap (16) is constructed separately from the hand lever (17) and is linearly displaceable between a lower closed position in the longitudinal axis of the fitting body (11) and an upper open position of the sanitary fitting (10) on a guide sleeve (23) secured in the interior of the fitting body (11), and that the hand lever (17) is connected by its one end onto the actuating lever (19) of the cartridge (20) and is guided through a receiving part (32) inserted in an opening (18) arranged on the circumference of the handle cap (16), wherein a bezel (28), overlapped by the handle cap (16) in the closed position and visible in the upper open position by displacement of the handle cap (16), is arranged in the fitting body (11).

2. The sanitary fitting according to Claim 1, **characterized in that** the guide sleeve (23), secured in a rotatably fixed manner in the fitting body (11), has on its circumference a window-like cutout (26) enabling the movement of the hand lever (17) in its movement directions.

3. The sanitary fitting according to Claim 1 or 2, **characterized in that** at the upper end of the bezel (28) facing the handle cap (16), a slide ring (30) overlapped by the handle cap (16) is secured.

4. The sanitary fitting according to one of Claims 1 to 3, **characterized in that** the receiving part (32), inserted in the opening (18) of the handle cap (16), has on its exterior a funnel-shaped widening (33) permitting the movement of the hand lever (17) in all its movement directions.

5. The sanitary fitting according to one of the preceding claims, **characterized in that** the bezel (28) is secured on the guide sleeve (23).

6. The sanitary fitting according to one of the preceding claims, **characterized in that** the guide sleeve (23) has guide ribs (25), projecting radially on its outer circumference, for guiding the handle cap (16) thereon.

## Revendications

1. Robinetterie (10) avec un corps de robinetterie présentant une sortie d'eau (12) et avec une cartouche (20), qui y est disposée à l'intérieur, raccordée à des conduites d'alimentation (15) pour de l'eau froide et de l'eau chaude, dans laquelle une voie d'écoulement colmatée est aménagée en sortie de la cartouche (20) dans la sortie d'eau (12) et un capuchon formant poignée (16) étant disposé sur le corps de robinetterie (11) avec un levier manuel (17) servant au réglage de la quantité d'eau et de la température d'eau est couplé à cet effet à un levier d'actionnement (19) de la cartouche (20) pouvant tourner en direction circonférentielle de la cartouche (20) tout comme également pivoter selon l'axe longitudinal de la cartouche (20), dans laquelle le capuchon formant poignée (16) coiffe le corps de robinetterie (11),
**caractérisée en ce que**
le capuchon formant poignée (16) est réalisé de manière séparée du levier manuel (17) et est déplaçable linéairement entre une position de fermeture inférieure dans l'axe longitudinal du corps de robinetterie (11) et une position d'ouverture supérieure du corps de robinetterie (10) au niveau d'une douille de guidage (23) fixée dans l'intérieur du corps de robinetterie (11) et **en ce que** le levier manuel (17) est raccordé avec l'une de ses extrémités au levier d'actionnement (19) de la cartouche (20) et passe à travers une partie de réception (32) mise en place dans une ouverture (18) disposée sur le pourtour du capuchon formant poignée (16), dans laquelle, dans le corps de robinetterie (11), un obturateur (28) est recouvert par le capuchon formant poignée (16) dans la position de fermeture et est visible dans la position d'ouverture supérieure par déplacement du capuchon formant poignée (16).

2. Robinetterie selon la revendication 1, **caractérisée en ce que** la douille de guidage (23) fixée en solidarité de rotation dans le corps de robinetterie (11) présente sur son pourtour un découpage (26) semblable à une fenêtre permettant le déplacement du levier manuel (17) dans les directions de déplacement de celui-ci.

3. Robinetterie selon la revendication 1 ou 2, **caractérisée en ce qu'**une bague de glissement (30) recouverte par le capuchon de poignée (16) est fixée sur l'extrémité supérieure, tournée vers le capuchon formant poignée (16), de l'obturateur (28).

4. Robinetterie selon l'une des revendications 1 à 3, **caractérisée en ce que** la partie de réception (32) mise en place dans l'ouverture (18) du capuchon formant poignée (16) présente, sur son côté extérieur, un évasement (33) en forme d'entonnoir autorisant le déplacement du levier manuel (17) dans toutes ses directions de déplacement.

5. Robinetterie selon l'une des revendications précédentes, **caractérisée en ce que** l'obturateur (28) est fixé sur la douille de guidage (23).

6. Robinetterie selon l'une des revendications précédentes, **caractérisée en ce que** la douille de guidage (23) présente, sur son pourtour extérieur, des nervures de guidage (25) en saillie radiale pour le guidage du capuchon formant poignée (16).
